# EUROPEAN PATENT APPLICATION

(11) **EP 1 199 257 A1**
(43) Date of publication of application: **24.04.2002**
(21) Application number: 01922062.3
(22) Date of filing: 24.04.2001
(51) Int. Cl.: B65D 85/57, G11B 23/023

(54) **DISK STORAGE CASE**

(30) Priority: 25.04.2000 JP 2000124340
(71) Applicant: Hasemi, Masateru, Kodaira-shi, Tokyo 187-0044 (JP)
(72) Inventor: Hasemi, Masateru, Kodaira-shi, Tokyo 187-0044 (JP)
(74) Representative: Müller, Hans-Jürgen
(86) International application number: JP0103529
(87) International publication number: WO0181205

(57) **Abstract**

This invention relates to a disc storage case adapted to store a hard case type floppy disc used for a personal computer, a word processor and the like, and a minidisc (MD), etc. used for musical minicomponents and the like. The disc storage case according to the present invention is formed by connecting together in one body two substantially triangular case members, each of which has an opened portion and plural partition plates, at one end portion of each thereof so that the case members can be opened and closed freely.

## Description

### Technical Field:

This invention relates to a disc storage case adapted to store a hard case type floppy disc used for a personal computer, a word processor and the like, and a minidisc (MD), etc. used for musical minicomponents and the like.

### Background of the Art:

The known storage case of this kind include a storage case provided with plural disc storage chambers formed by dividing the interior of the cover-carrying storage case by partition plates, and a storage case having case members capable of being opened and closed like a French door, and adapted to store discs so that the discs in ore case member alternate with those in the other when the case members are closed.

Although the known partition-carrying disc storage case has an advantage of its capability of storing plural discs in a space of predetermined dimensions, it has a narrow space between disc storage chambers, so that a label pasted on each stored disc and showing the content of information stored in the disc cannot be read from the outside. Therefore, it takes much time to take out an object disc when the disc is used, from the storage case. The difficulty in taking out a disc from the storage case can be eliminated by increasing the width of the space between the disc storage chambers. However, when this difficulty is dealt with by this method, the number of discs capable of being stored in a space of predetermined dimensions decreases.

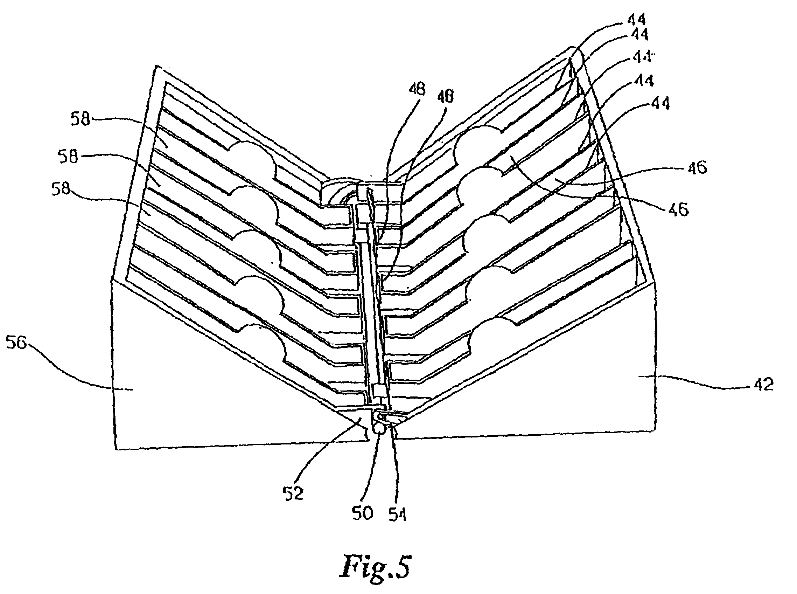

A known French door-like disc storage case is shown in perspective in, for example, Fig. 5. In this disc storage case, storage chambers 46 are formed by providing partition plates 44 and front wall surfaces 48 in a case member 42. The front wall surfaces 48 are not joined to those of adjacent storage chambers, i.e., non-storage- chamber spaces are formed among adjacent storage chambers. In the other case member 56, storage chambers are formed similarly. The storage chambers are arranged so that the storage chambers in one case member alternate in a mutually superposed state with those in the other when the case members are closed. The respective case members are joined together by hook members 52, 54 and a hinge 50, and the portions of the case members 42, 56 which are in the vicinity of bottom portions thereof are used as fulcrums via which the case members are turned to be opened or closed. Accordingly, in order to close the case members, they are moved via the hinge 50 as a fulcrum, so that the front wall surfaces 48 of the storage chambers of one case member fit in non-storage-chamber spaces 58 among the storage chambers of the other. The discs in the storage chambers are stored so as not to project therefrom, owing to the front wall surfaces 48. Since the front wall surfaces 48 in one case member are formed so that they fit in the non-storage-chamber spaces 58 among the storage chambers of the other, the front wall surfaces 48 need to be provided for the respective storage chambers. Namely, the front wall surfaces 48 cannot be continuously provided over plural storage chambers, so that the construction of this disc storage case becomes complicated.

Thus, in the French door-like disc storage case, improvements have been made on the difficulty in taking out a disc therefrom, easiness of identifying of information shown on the surface of a label and the number of discs capable of being stored. However, this disc storage case has a complicated construction. Namely, the front wall surfaces of the storage chambers are provided independently of one another, and a case member-connecting method using a combination of the hook members and hinge is employed. Under the circumstances, the development of a disc storage case having storage chambers of a simpler construction is expected.

### Disclosure of the Invention:

The present invention has been made in view of the above-mentioned circumstances, and provides a disc storage case formed by connecting together in one body two substantially triangular case members, each of which has an opened portion and plural partition plates, at one end portion of each thereof so that the case members can be opened and closed freely. It is preferable that the disc storage case be provided with disc storage chambers, each of which is formed by substantially triangular partition plates arranged at predetermined intervals, and a continuous front wall surface formed at a front side of the partition plates, in such a manner that, when these storage case members are closed, the disc storage chambers in one storage case member alternate in a superposed state with those in the other; and that an integral connecting portion of a plastic be formed at upper end sections of the front wall surfaces so that the storage case members can be opened and closed freely via the connecting portion as a fulcrum. This disc storage case may also be formed so that the storage case be provided with disc storage chambers, each of which is formed by substantially triangular partition plates arranged at predetermined intervals, and a continuous front wall surface formed at front side portions of the partition plates, in such a manner that, when these storage case members are closed, the disc storage chambers in one storage case member alternate in a mutually superposed state with those in the other; and that an integral connecting portion to which a hinge is fixed is formed at upper end sections of the front wall surfaces so that the storage case members can be opened and closed freely via the connecting portion as a fulcrum.

### Brief Description of the Drawings:

Fig. 1 is a perspective view showing the schematic construction, of an embodiment of the disc storage case according to the present invention;
Fig. 2 is a perspective view showing the condition of the disc storage case opened;
Fig. 3 is a plan view showing the arrangement of disc storage chambers of the disc storage case opened;
Fig. 4 is a schematic diagram showing the condition of the case with discs stored therein; and
Fig. 5 is a perspective showing a related art disc storage case.

### Best Mode for Carrying Out the Invention:

An embodiment of the disc storage case according to the present invention will now be described in detail with reference to the attached drawings in which the same reference numerals are added to the same constituent parts.

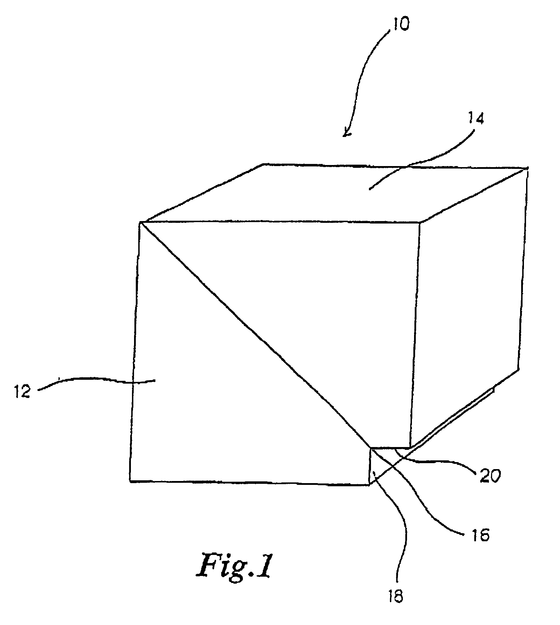

Fig. 1 is a perspective view showing a schematic construction of an embodiment of the disc storage case 10 according to the present invention. The disc storage case 10 is formed by hinging 16 two substantially triangular case members 12, 14, each of which has an opened portion and plural partition plates, at one end portion of each of their respective front wall surfaces 18, 20, and thereby connected together in one body so that the case members can be opened and closed freely. The triangular case members 12, 14 combined are formed to a rectangular column-like structure opened at their diagonal surface portions and having front wall surfaces 18, 20. Fig. 1 shows a closed condition of the case members 12, 14.

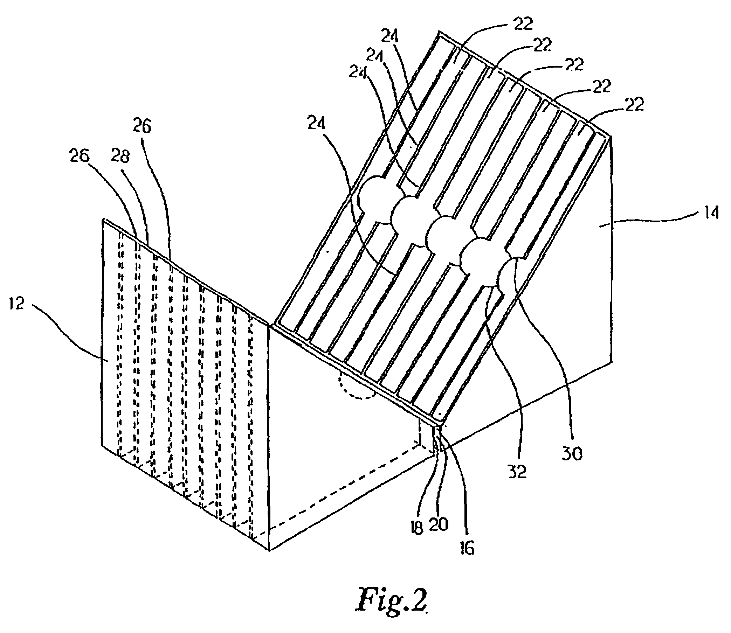

Fig. 2 is a perspective view showing an opened condition of the storage case 10. The triangular case member 14 is provided with plural partition plates 24, and disc storage chambers 22 formed alternately with non-storage-chamber spaces. The other triangular case member 12 is also provided with plural partition plates 26 in substantially the same manner, and disc storage chambers 28 alternately with non-storage-chamber spaces. At the front side of the storage chambers, front wall surfaces 20, 18 are provided so as to extend substantially vertically. The partition plates 24, 26 are provided with semicircular recesses and projections 30, 32 alternately so that the recesses and projections are not superposed on each other when the case members are closed. At opposed end portions of the front wall surfaces, a hinge 16 is formed to an integral construction out of a plastic, and the two case members become able to be opened and closed freely via the hinge 16 as a fulcrum. Owing to this arrangement, the construction of the storage chambers becomes simple.

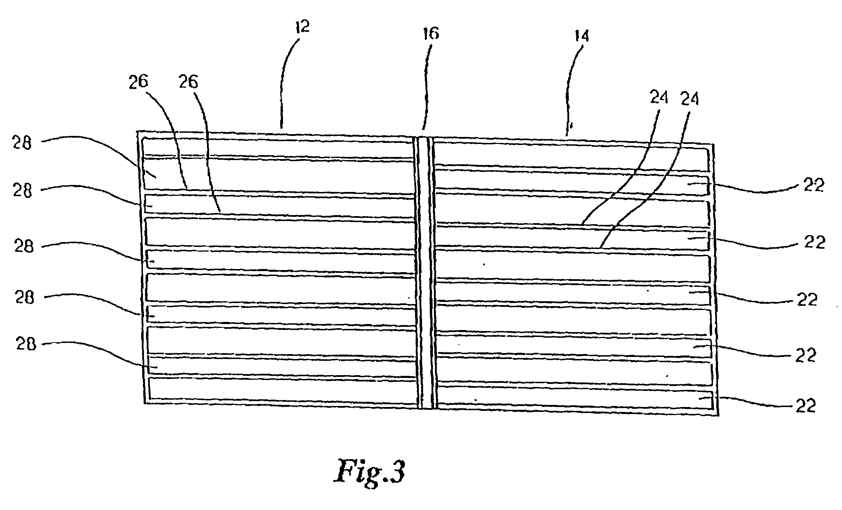

Fig. 3 shows the arrangement of the storage chambers with the storage case members opened. The disc storage chambers 22 of the case member 14 are provided alternately with non-storage-chamber spaces. The storage chambers 28 of the case member 12 are also provided alternately with non-storage-chamber spaces. The width of the storage chambers defined by the partition plates 24, 26 is set close to that of discs to be stored therein. The storage chambers 22 are arranged so that they are positioned in the non-storage-chamber spaces which adjoin the storage chambers 28 when the case members 12, 14 are closed.

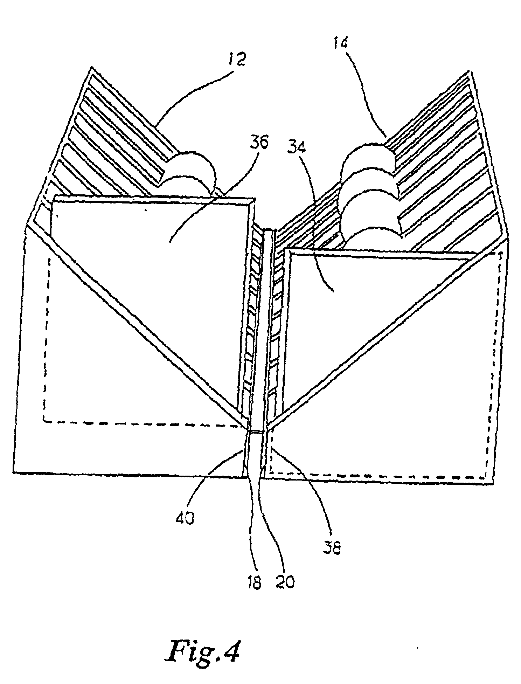

Fig. 4 is a schematic diagram showing the condition of discs stored in a storage case opened. The discs 34 stored in storage chambers in the case member 14 and those 36 stored in storage chambers in the case member 12 have a mutually staggered relation. The discs 34 are stored without causing the same to project from the storage chambers even when the case members are opened and closed, owing to a front wall surface 38 of the storage chambers opposed to a front wall surface 20. Similarly, the discs 36 are stored without causing the same to project from a front wall surface 40.

The disc storage case according to the present invention is made by forming two substantially triangular case members having opened portions and plural partition plates, and connecting these case members together in one body at one end portion of each thereof so that the case members can be opened and closed freely; and provided with disc storage chambers formed of substantially triangular partition plates provided at predetermined intervals, and continuous front wall surfaces extending at the front side portions of the partition plates, in such a manner that the disc storage chambers in one case member alternate in a superposed state with those in the other when the case members are closed. An integral connecting portion formed continuously out of a plastic is provided at upper end portions of the front wall surfaces so that the case members can be opened and closed via the connecting portion as a fulcrum. Owing to this arrangement, improvements have been made concerning the easiness of handling the discs, the identifying of the information shown on the surfaces of the labels pasted on the discs, and the number of discs capable of being stored in the case. Furthermore, the construction of the storage chambers becomes simple, and the manufacturing of the disc storage case easy.

## Claims

1. A disc storage case **characterized in that** the case is formed by connecting together in one body two substantially triangular case members, each of which has an opened portion and plural partition plates, at their respective one end portion so that the case members can be opened and closed freely.

2. A disc storage case according to Claim 1, wherein the case is provided with disc storage chambers formed of substantially triangular partition plates provided at predetermined intervals, and continuous front wall surfaces provided at front surface portions of the partition plates; and formed so that the disc storage chambers of one case member alternate in a superposed state on those of the other when the case members are closed, a continuous integral connecting portion of a plastic being formed at upper end portions of the front wall surfaces, whereby the case members can be opened and closed freely via the connecting portion as a fulcrum.

3. A disc storage case according to Claim 1, wherein the case is provided with disc storage chambers formed of substantially triangular partition plates provided at predetermined intervals, and continuous front wall surfaces provided at front surface portions of the partition plates; and formed so that the disc storage chambers of one case member alternate in a superposed state with those of the other when the case members are closed, a hinge-carrying continuous integral connecting portion being formed at upper end portions of the front wall surfaces, whereby the case members can be opened and closed freely via the connecting portion as a fulcrum.
